# EUROPÄISCHE PATENTSCHRIFT

(11) **EP 1 771 371 B1**
(45) Veröffentlichungstag und Bekanntmachung des Hinweises auf die Patenterteilung: **24.09.2014**
(21) Anmeldenummer: 05776212.2
(22) Anmeldetag: 29.07.2005
(51) Int. Cl.: B65H 63/00, D01D 13/00

(54) **VERFAHREN UND VORRICHTUNG ZUR QUALITÄTSSTEUERUNG BEI HERSTELLUNG EINES STRANGFÖRMIGEN POLYMERPRODUKTES**
METHOD AND DEVICE FOR CONTROLLING THE QUALITY DURING THE PRODUCTION OF AN EXTRUDED POLYMER PRODUCT
PROCEDE ET DISPOSITIF POUR GERER LA QUALITE LORS DE LA FABRICATION D'UN PRODUIT POLYMERE DE FORME ALLONGEE

(30) Priorität: 31.07.2004 DE 102004037263
(43) Veröffentlichungstag der Anmeldung: 11.04.2007
(73) Patentinhaber: Oerlikon Textile GmbH & Co. KG, 42897 Remscheid (DE)
(72) Erfinder: MÜHLENMEISTER, Reinhard, 51109 Köln (DE); BORNHEIM, Marcel, 50733 Köln (DE)
(74) Vertreter: Kahlhöfer, Hermann
(86) Internationale Anmeldenummer: PCT/EP2005/008245
(87) Internationale Veröffentlichungsnummer: WO 2006/013065

(56) Entgegenhaltungen:
- EP-A- 1 093 825
- WO-A-94/25869
- DE-A1- 19 911 704
- US-A- 5 621 637

## Beschreibung

Die Erfindung betrifft ein Verfahren zur Qualitätssteuerung bei Herstellung eine strangförmigen Polymerproduktes gemäß dem Oberbegriff des Anspruchs 1 sowie eine Vorrichtung zur Durchführung des Verfahrens gemäß dem Oberbegriff des Anspruchs 14.

Ein gattungsgemäßes Verfahren ist aus der EP 0 644 282 A1 bekannt.

Bei dem bekannten Verfahren wird in einem Herstellungsprozess für synthetische Fäden zur Prozessführung und Qualitätssteuerung zumindest ein Prozessparameter oder ein Produktparameter gemessen und mit vorgegebenen Sollwerten oder Toleranzbändern verglichen. Auf der Grundlage des Vergleichs wird ein Steuersignal zur Beeinflussung der Prozessführung oder ein die Qualität des Endproduktes bestimmendes Qualitätssignal erzeugt. Dabei zielt das bekannte Verfahren insbesondere darauf ab, die an einer Referenzstelle durchgeführten Messungen zu nutzen, um mehrere Bearbeitungsstellen mit Hilfe des Steuersignales anzusteuern.

Aus der WO 94/25869 ist ein weiteres Verfahren zur Überwachung eines Herstellungsprozesses eines synthetischen Fadens bekannt, bei welchem zumindest zwei Prozessparameter fortlaufend gemessen und mit Sollwertbereichen verglichen werden. Sobald zumindest zwei unzulässige Abweichungen der Prozessparameter festgestellt werden, erfolgt die Erzeugung eines Qualitätssignales, welches mit dem hergestellten Endprodukt verknüpft und für die Prozessführung benutzt wird.

Demgegenüber offenbart die DE 199 11 704 A1 ein Verfahren, bei welchem laufend aus den Messwertschwankungen eines Prozess- oder Produktparameters ein Qualitätswert ermittelt wird und dem Faden zugeordnet wird. Dabei werden die Messwertschwankungen eines bestimmten Zeitabschnittes berücksichtigt.

Die EP 1 093 825 A2 offenbart ein Verfahren zur Überwachung eines Prozesses bei der Herstellung von synthetischen Fasern, welches darauf beruht, dass eine Mehrzahl von Prozessparametern erfasst und gemeinsam zu einer Variablen transformiert werden. Die Messung und Bestimmung der Variablen wird in einer vorbestimmten Zeitfolge wiederholt, so dass der Herstellungsprozess durch Beobachtung des zeitlichen Verlaufs der Variablen überwachbar ist.

Die US 5,621,637 offenbart ein Verfahren zur Qualitätssteuerung bei der Herstellung einer Vielzahl von Fäden. Bei diesem Verfahren werden eine Vielzahl von Prozessparametern kontinuierlich und gleichzeitig gemessen. Aus den Prozessparametern wird eine Kenngröße abgeleitet, welche mit einem vorgegebenen Sollwert verglichen wird. Als Ergebnis dieses Vergleiches wird eine Stellgröße bestimmt mit welcher das Verfahren zur Herstellung der Fäden gesteuert wird.

Bei den im Stand der Technik bekannten Verfahren werden im wesentlichen die zeitgleich ermittelten Messwerte der Prozessparameter und Produktparameter genutzt, um die momentane Qualität des Endproduktes zu bestimmen. Diese Vorgehensweise hat jedoch den Nachteil, dass die beispielsweise in der Schmelzeaufbereitung auftretenden Messwertschwankungen der Prozessparameter sich erst zeitverzögert in dem Endprodukt auswirken und somit zur Verfälschung der Qualitätssignale führen. Zudem basiert die Prozessführung darauf, dass die korrigierende Steuerung des Prozesses zur Verbesserung der Qualität nur im Nachhinein nach festgestellten Prozessunregelmäßigkeiten erfolgen kann.

Es ist nun Aufgabe der Erfindung ein Verfahren zur Qualitätssteuerung bei Herstellung eines strangförmigen Polymerproduktes der gattungsgemäßen Art sowie eine Vorrichtung zur Durchführung eines derartigen Verfahrens zu schaffen, bei welchem ein strangförmiges Polymerprodukt in mehreren Prozessschritten mit einer bestimmbaren Qualität herstellbar ist.

Ein weiteres Ziel der Erfindung liegt darin, ein Verfahren zur Qualitätssteuerung bei der Herstellung eines strangförmigen Polymerproduktes sowie eine Vorrichtung zur Durchführung des Verfahrens zu schaffen, mit welchem eine flexible und auf die tatsächlich hergestellte Produktqualität abgestellte Prozessführung möglich ist.

Es ist ebenso Aufgabe der Erfindung das gattungsgemäße Verfahren zur Qualitätssteuerung derart weiterzubilden, so dass auch komplexe Herstellungen mit einer Vielzahl von Prozessschritten angefangen vom Vorprodukt bis hin zum Polymerprodukt sicher geführt werden können.

Die Aufgabe wird erfindungsgemäß durch ein Verfahren mit den Merkmalen nach Anspruch 1, durch ein Verfahren mit den Merkmalen nach Anspruch 2 sowie durch eine Vorrichtung mit den Merkmalen nach Anspruch 13 gelöst.

Vorteilhafte Weiterbildungen der Erfindung sind durch die Merkmale und Merkmalskombinationen der Unteransprüche definiert.

Der Erfindung liegt die Erkenntnis zugrunde, dass bei der Herstellung eines strangförmigen Gutes sich die jeweils von dem Vorprodukt bis zu dem Endprodukt durchgeführten Prozessschritte in unterschiedlicher Zeitreihenfolge an dem Endprodukt bemerkbar machen. So wird beispielsweise bei der Herstellung eines synthetischen Fadens eine Prozessabweichung bei der Aufbereitung des Vorproduktes sich wesentliche später auswirken als eine Prozessabweichung beim Aufwickeln des Fadens. Durch das erfindungsgemäße Verfahren wird nun sichergestellt, dass bei der Erzeugung der Qualitätssignale und / oder Steuersignale nur die maßgeblichen Messgrößen zur Bestimmung der tatsächlichen Produktqualität genutzt werden. Hierzu wird dem Prozessparameter und / oder dem Produktparameter ein Messzeitpunkt und eine Durchlaufzeit zugeordnet. Die Durchlaufzeit kennzeichnet dabei den momentanen Materialfluss vom jeweiligen Prozessschritt bis hin zum endgültigen Polymerprodukt. Damit lässt sich vorteilhaft aus einem gemessenen Prozessparameter innerhalb der Prozesskette die nach Ablauf der Durchlaufzeit zu erwartende Produktqualität des Polymerproduktes vorhersagen. Somit sind Prozessführungen im Hinblick auf zukünftige Qualitätsveränderungen des Polymerproduktes möglich.

Ein weiterer Aspekt der Erfindung liegt jedoch darin, dass zu jedem Zeitpunkt der Herstellung des Polymerproduktes die tatsächlich hergestellte Produktqualität bestimmbar ist. Hierzu wird dem Qualitätssignal oder dem Steuersignal ein Bestimmungszeitpunkt zugeordnet, um bei der Bestimmung des Qualitätssignales und / oder Steuersignales die Prozessparameter und / oder die Produktparameter oder die Abweichung des Prozessparameters und / oder des Produktparameters von dem vorgegebenen Sollwert oder dem Sollwertbereich heranziehen zu können, die zeitlich unter Berücksichtigung des Materialflusses um eine Durchlaufzeit vor dem Bestimmungszeitpunkt erfasst wurden. Damit lassen sich vorteilhaft Qualitätswerte erzeugen und unmittelbar dem Endprodukt zuordnen, um beispielsweise für einen Weiterbehandlungsprozess genutzt zu werden.

Bei einem Herstellungsprozess, bei welchem die Produktionsgeschwindigkeit im wesentlichen konstant gehalten ist, lässt sich die Verfahrensvariante bevorzugt verwenden, bei welcher dem Prozessparameter und / oder dem Produktparameter ein Messort zugeordnet wird, durch welche sich die Durchlaufzeit ermitteln lässt.

Für den Fall, dass mehrere Prozessparameter und / oder mehrere Produktparameter erfasst werden, wird vorteilhaft jedem Prozessparameter und jedem Produktparameter der jeweilige Messzeitpunkt und die jeweilige Durchlaufzeit zugeordnet. So ist jeder Prozessparameter und jeder Produktparameter innerhalb der Prozesskette durch einen Messzeitpunkt und eine jeweilige Durchlaufzeit oder alternativ durch einen jeweiligen Messort identifizierbar.

Für die kontinuierliche Qualitätssteuerung ist es besonders vorteilhaft, die Prozessparameter und / oder die Produktparameter fortlaufend zu erfassen und abzuspeichern.

Grundsätzlich lässt sich das Qualitätssignal oder das Steuersignal bei Vorhandensein von mehreren Prozessparametern oder Produktparametern mit unterschiedlichen Verfahrensvarianten erzeugen. Bei einer ersten Variante werden nur die Prozessparameter und / oder Produktparameter herangezogen, die zum gleichen Zeitpunkt gemessen wurden. Damit lassen sich Rückschlüsse auf mehrere aufeinander folgende Prozessschritte oder sogar auf die gesamte Prozesskette schließen. Bevorzugt lassen sich damit auch Prozessschritte steuern, die aufgrund sehr hoher Produktionsgeschwindigkeiten beispielsweise das Verstrecken und Abziehen eines Fadens, gemeinsam steuern.

Bei der Verfahrensvariante, bei welcher zur Erzeugung des Qualitätssignales und / oder des Steuersignales die Prozessparameter und / oder Produktparameter mit gleicher Durchlaufzeit herangezogen werden, sind besonders geeignet, um zukünftige Qualitätsveränderungen aufzuzeigen und entsprechende Prozessänderungen herbeizuführen. Hierbei kann sowohl der den Prozessparameter zugeordnete Prozessschritt direkt angesteuert werden oder aber eine Ansteuerung des letzten Prozessschrittes zu endgültigen Fertigstellung des Polymerproduktes zeitversetzt erfolgen.

Um eine Vorhersage der produzierten Produktqualität vornehmen zu können, ist die Verfahrensvariante besonders geeignet, bei welcher zur Erzeugung des Qualitätssignales und / oder des Steuersignales die Prozessparameter und / oder Produktparameter herangezogen werden, deren Messzeitpunkt und Durchlaufzeit einen identischen zukünftigen Bestimmungszeitpunkt ergeben. Damit lassen sich alle innerhalb der Prozesskette erfassten Prozessparameter oder Produktparameter zur Qualitätsbestimmung des zu produzierenden Polymerproduktes bestimmen.

Bei der Herstellung von strangförmigen Polymerprodukten werden diese nach Fertigstellung bevorzugt mit Qualitätsstufen gekennzeichnet. So ist bekannt, bei der Herstellung von synthetischen Fäden die in einer Spule aufgewickelten Fäden als A-, B- oder C-Qualität einzustufen, wobei A die maximal mögliche Produktqualität darstellt. Eine derartige Gewichtung lässt sich bereits vorteilhaft bei einem Ist-Soll-Vergleich der Prozessparameter und / oder Produktparameter berücksichtigen. Hierbei wird gemäß einer besonders bevorzugten Verfahrensvariante dem Prozessparameter und / oder Produktparameter mehrere Sollwerte oder Sollwertbereiche zugeordnet, so dass eine Gewichtung der Abweichung der Prozessparameter und / oder der Produktparameter möglich ist.

Zur Verbesserung der Flexibilität des Verfahrens lassen sich die Vorgaben der Sollwerte und / oder Sollwertbereiche verändern. Ebenso kann durch manuelle Eingriffe über eine Bedienungseinheit die Erzeugung des Qualitätssignales oder des Steuersignales beeinflusst werden. So lassen sich wahlweise bestimmte Prozessparameter einer Prozesskette eliminieren, um deren Wirkung auf ein Qualitätssignal oder Steuersignal zu erfassen. Ebenso können alternative Algorithmen hinterlegt sein, die wahlweise zur Auswertung der Qualität oder zur Prozessführung genutzt werden.

Für den Fall, dass in dem Herstellungsprozess das strangförmige Polymerprodukt durch einen Faden gebildet ist, welcher in einem letzten Prozessschritt zu einer Spule aufgewickelt wird, stellt die Verfahrensvariante eine besonders hohe Flexibilität der Prozessführung dar, bei welcher die innerhalb einer Wickelzeit auftretenden Qualitätsänderungen des Fadens unmittelbar zur Ausführung eines Spulenwechsels genutzt werden. Damit können insbesondere kurzzeitige Prozessschwankungen, die zu einer Fehlqualität oder noch schlechteren Qualität des Fadens führen, vorteilhaft in einer nur teilgewickelten Spule aufgenommen und eliminiert werden.

Zur Durchführung des erfindungsgemäßen Verfahrens weist die erfindungsgemäße Vorrichtung vorteilhaft eine Prozessleitsteuerung auf, bei welcher den mit der Prozessleitsteuerung verbundenen Sensormittel ein Mittel zur Digitalisierung der Messsignale mit Messzeit- und Messortsangaben zugewiesen ist. Das in der Prozessleitsteuerung vorgesehene Speichermittel enthält zudem ein Zeitregister, durch welches jedem Messort eine Durchlaufzeit zuteilbar ist. Die ortsabhängige Durchlaufzeit ist in dem Zeitregister hinterlegt.

Zur Beeinflussung der Qualitätssteuerung bzw. der Prozessführung ist gemäß einer vorteilhaften Weiterbildung der erfindungsgemäßen Vorrichtung die Prozessleitsteuerung mit einer Schnittstelle ausgebildet, an welcher eine manuelle Bedienungseinheit angebunden ist. Über die manuelle Bedienungseinheit lassen sich dabei die Vorgaben der Sollwerte und der Sollwertbereiche sowie die Durchlaufzeiten im Zeitregister eingeben.

Zur Visualisierung ist eine weitere Schnittstelle an der Prozessleitsteuerung vorgesehen, die mit einer Ausgabeeinheit verbunden ist. Die Ausgabeeinheit, die beispielsweise durch einen Mikroprozessor mit Monitor gebildet sein kann, lassen sich die Prozessparameter, Produktparameter oder Qualitätssignale in ihren Verläufen während des Prozesses darstellen. Somit sind auch übergeordnete manuelle Eingriffe zur Prozessführung möglich.

Um die Gesamtheit der Prozesskette hinsichtlich ihrer Prozessführung und der Qualitätsbestimmung mit einer Bedienperson ausführen zu können, ist die Ausgabeeinheit vorteilhaft mit der Bedienungseinheit kombiniert.

Im folgenden wird die Erfindung anhand von Ausführungsbeispielen näher beschrieben.

Es stellen dar:
- Fig. 1: ein Schema einer erfindungsgemäßen Vorrichtung zur Durchführung des erfindungsgemäßen Verfahrens bei der Herstellung eines strangförmigen Polymerproduktes
- Fig. 2: schematisch ein Steuerungsschema zum Verfahrensablauf des Herstellungsprozesses nach Fig. 1
- Fig. 3: schematisch der Verlauf eines Prozessparameters während der Herstellung eines strangförmigen Polymerproduktes
- Fig. 4: schematisch ein Ausführungsbeispiel der erfindungsgemäßen Vorrichtung zur Herstellung einer Vielzahl von synthetischen Fäden

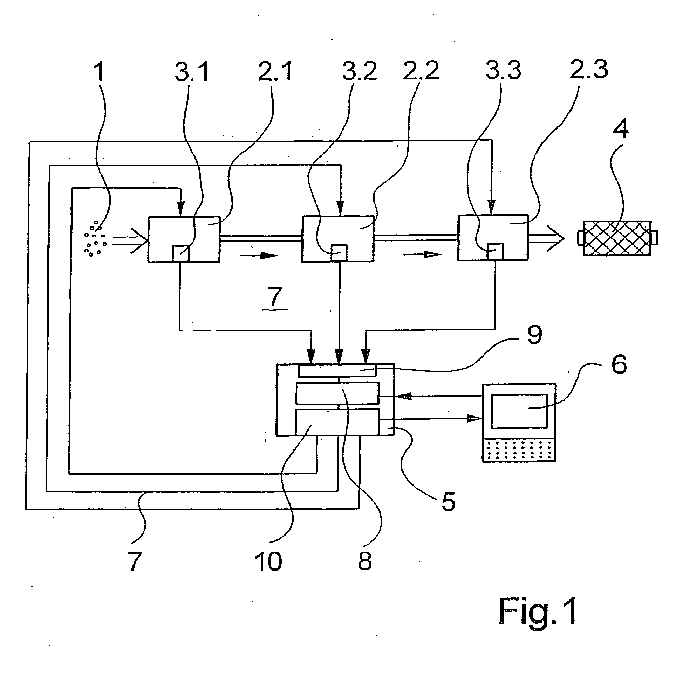

In Fig. 1 ist ein Schema der erfindungsgemäßen Vorrichtung zur Durchführung des erfindungsgemäßen Verfahrens dargestellt. Hierbei wird eine Herstellanlage durch mehrere Prozessmodule 2.1, 2.2 und 2.3 gebildet. Die Prozessmodule 2.1, 2.2 und 2.3 bilden eine Prozesskette zur Herstellung eines strangförmigen Polymerproduktes. Hierzu wird ein Vorprodukt 1 beispielsweise in Form eines Kunststoffgranulates dem Herstellungsprozess aufgegeben und nach Durchlauf durch die Prozessmodule 2.1, 2.2 und 2.3 zu einem endgültigen strangförmigen Polymerprodukt 4 beispielsweise ein auf einer Spule gewickelten Faden geführt. Jedem der Prozessmodule 2.1, 2.2 und 2.3 ist zumindest ein Sensormittel 3.1, 3.2 und 3.3 zugeordnet. Die Prozessmodule 2.1, 2.2 und 2.3 umfassen dabei grundsätzlich mehrere Prozessaggregate um einen Prozessschritt innerhalb der gesamten Prozesskette ausführen zu können. Hierbei könnte beispielsweise der Prozessmodul 2.1 die Aufbereitung des Kunststoffgranulates ausführen. Im Prozessmodul 2.2 könnten die Prozessaggregate zum Aufschmelzen und der Schmelzeaufbereitung angeordnet sein. Das Prozessmodul 2.3 ließe sich durch eine Schmelzspinnvorrichtung mit Aufwickeleinrichtung bilden.

Die Anzahl der Prozessmodule und die Ausbildung der Prozessmodule ist jedoch beliebig, so dass damit alle bekannten strangförmigen Polymerprodukte wie beispielsweise Spinnkabel, Stapelfaser, Folienbändchen, Teppichgarne, technische Fäden oder textile Fäden herstellbar sind.

Zur Überwachung und Steuerung der Herstellungsanlagen ist eine zentrale Prozessleitsteuerung 5 vorgesehen. Die Prozessleitsteuerung 5 ist über ein Steuer-/ Überwachungsnetzwerk 7 mit den Prozessmodulen 2.1, 2.2 und 2.3 sowie den Sensormitteln 3.1, 3.2 und 3.3 gekoppelt. Das Steuer- / Überwachungsnetzwerk 7 kann hierbei durch ein BUS-System gebildet sein.

Der Aufbau der Prozessleitsteuerung 5 wird nachfolgend nur anhand der Mittel beschrieben, die zur Durchführung des erfindungsgemäßen Verfahrens erforderlich sind. Innerhalb der Prozessleitsteuerung 5 ist ein Digitalisierungsmittel 9, ein Speichermittel 8 und eine Auswertelektronik 10 enthalten. Das Digitalisierungsmittel 9 ist den Sensormitteln 3.1, 3.2 und 3.3 zugeordnet, um eine Digitalisierung der Messsignale mit Messzeit- und Messortsangaben vornehmen zu können. Hierbei lassen sich die Messortsangaben durch Adressencodes bestimmen, die den Sensormitteln 3.1, 3.2 und 3.3 zugeordnet wurden. Die eingehenden Messsignale werden nach der Digitalisierung in dem Speichermittel 8 aufgenommen. Das Speichermittel 8 enthält zusätzlich ein Zeitregister, in welchem ortsabhängige Durchlaufzeiten hinterlegt sind. Die jeweiligen Durchlaufzeiten kennzeichnen die Dauer des Materialflusses vom jeweiligen Prozessmodul bzw. vom jeweiligen Messort bis zur endgültigen Fertigstellung des Polymerproduktes. Das Speichermittel 8 ist mit der Auswertungselektronik 10 verknüpft, so dass bei Auslesen der Messsignale und des Zeitregisters jedem der durch die Messsignale erfassten Istwerte der Prozessparameter und / oder Produktparameter eine Durchlaufzeit zugeordnet wird. Anhand der ebenfalls ausgelesenen Sollwerte bzw. Sollwertbereiche lässt sich nun nach vorgegebenen Algorithmen eine Auswertung durchführen und zur Erzeugung eines Qualitätssignales oder eines Steuersignales nutzen. Durch die Auswertelektronik 10 können unmittelbar Steuersignale erzeugt werden, die über das Steuer- / Überwachungsnetzwerk 7 den betreffenden Prozessmodulen 2.1, 2.2 oder 2.3 zugeführt werden können. Das durch die Auswertelektronik 10 erzeugte Qualitätssignal wird vorzugsweise einer Ausgabeeinheit 6 zugeführt. Hierzu ist die Prozessleitsteuerung 5 über eine Schnittstelle mit einer Ausgabe- / Bedieneinheit 6 gekoppelt. Die Ausgabe- / Bedieneinheit 6 enthält ein manuelles Bedienfeld, durch welchen ein manueller Eingriff gegeben ist. So lassen sich beispielsweise Vorgaben von Sollwerten oder Änderungen der Durchlaufzeit darüber eingeben. Des Weiteren können Vorgaben zur Auswertung bestimmter Qualitätssignale gegeben werden.

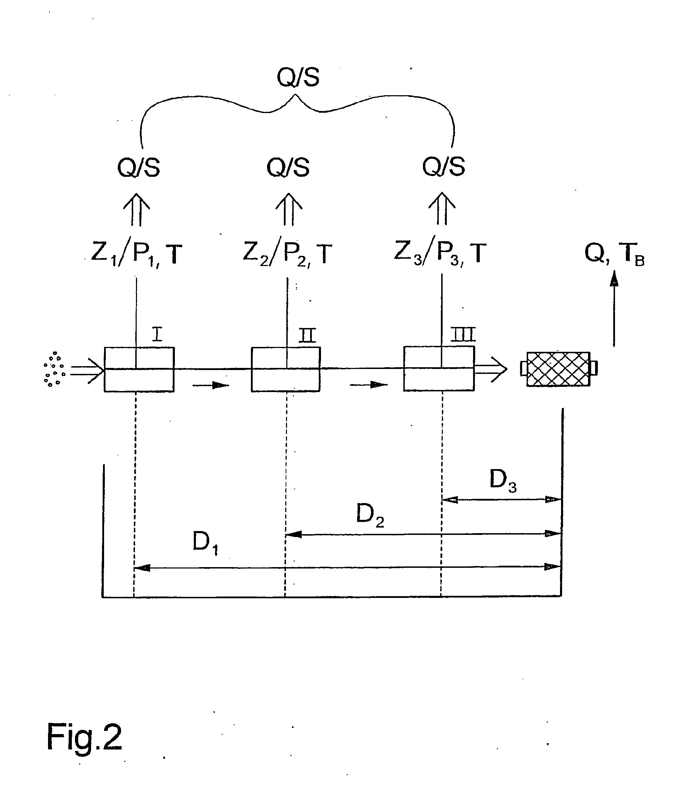

Zur Erläuterung des erfindungsgemäßen Verfahrens, welches mit dem Ausführungsbeispiel der erfindungsgemäßen Vorrichtung nach Fig. 1 durchführbar ist, wird auf das in Fig. 2 dargestellte Steuerungsschema Bezug genommen. Bei dem in Fig. 2 dargestellten Steuerungsschema sind die Prozessmodule durch die einzelnen Prozessschritte I, II und III gekennzeichnet. Innerhalb jedes Prozessschrittes können einzelne oder mehrere Prozessparameter oder einzelne oder mehrere Produktparameter durch mehrere Sensoren erfasst werden. Die den Prozessmodulen zugeordneten Sensormittel weisen hierzu mehrere Sensoren auf, die beispielsweise Drehzahlen, Drücke, Einstellparameter oder Temperaturen erfassen. So könnte beispielsweise in dem Prozessschritt I ein Prozessparameter Z1 und / oder ein Produktparameter P 1 zu einer Messzeit T gemessen werden. Alternativ oder zusätzlich könnte in dem Prozessschritt II ein weiterer Prozessparameter Z2 und / oder ein Produktparameter P2 zu der Messzeit T erfasst werden. In dem Prozessschritt III werden dementsprechend ein Prozessparameter Z3 und / oder ein Produktparameter P3 zu der Messzeit erfasst.

Unter der Annahme, dass alle Prozessparameter und Produktparameter zur gleichen Messzeit T erfasst würden, wirken sich jedoch die einzelnen Prozessparameter Z und die einzelnen Produktparameter P erst zeitversetzt in der endgültigen Fertigstellung des Polymerproduktes 4 auf. Durch den Materialfluss von dem Vorprodukt 1 bis hin zum Polymerprodukt 4 unter Voraussetzung bestimmter Produktionsgeschwindigkeiten ergeben sich Durchlaufzeiten zwischen den einzelnen Prozessschritten I, II und III und dem endgültigen Polymerprodukt 4. So wird der zur Messzeit T in dem Prozessschritt I erfasste Produktparameter P1 sich erst nach Ablauf einer Durchlaufzeit von D1 in dem Polymerprodukt 4 bemerkbar machen. Dementsprechend wirken sich Unregelmäßigkeiten in dem Prozessschritt II nach Ablauf der Durchlaufzeit D2 und Unregelmäßigkeiten in dem Prozessschritt III nach Ablauf der Durchlaufzeit D3 in dem endgültigen Polymerprodukt 4 aus.

Das erfindungsgemäße Verfahren lässt sich nun vorteilhaft dazu nutzen, um zu jedem Prozessschritt jeweils eine Auswertung der Messsignale vorzunehmen. So werden die in dem Prozessschritt I gemessene Prozessparameter Z1 und Produktparameter P1 mit hinterlegten Sollwerten oder Sollwertbereichen verglichen. Die dabei auftretenden Differenzen lassen sich unmittelbar in ein Qualitätssignal Q und / oder ein Steuersignal S überführen. Bevorzugt werden hierbei Steuersignale erzeugt, die unmittelbar einen Eingriff in den betreffenden Prozessschritt ermöglichen. Ein daraus abgeleitetes Qualitätssignal wird genutzt, um den zukünftigen Prozessverlauf im Hinblick auf die Produktqualität des Polymerproduktes 4 aufzuzeigen.

Analog könnten die in dem Prozessschritten II und III gemessenen Prozessparameter Z2 und Z3 sowie die gemessenen Produktparameter P2 und P3 unmittelbar einer Auswertung zugeführt werden, um bei unzulässigen Abweichungen der Parameter einen schnellen Eingriff in den jeweiligen Prozessschritt zu ermöglichen. Dabei lassen sich sowohl einzelne Qualitätssignale als auch einzelne Steuersignale unabhängig voneinander zu den einzelnen Prozessschritten ermitteln.

Alternativ besteht jedoch auch die Möglichkeit, mehrere Prozessparameter und / oder Produktparameter von mehreren Prozessschritten in eine Auswertung einzubeziehen. Eine derartige Verfahrensvariante ist besonders empfehlenswert bei komplexen Prozessen, bei welchen eine gegenseitige Beeinflussung der Prozessschritte gegeben ist. So können beispielsweise Abweichungen in einem vorgehenden Prozessschritt durch entsprechende Gegenmaßnahmen im nachfolgenden Prozessschritt kompensiert werden. Das aus der Summenauswertung erzeugte Steuersignal lässt sich somit zur Ansteuerung eines oder aller Prozessschritte nutzen. Das erzeugte Qualitätssignal Q lässt sich insbesondere eine Vorschau der hergestellten Produktqualität zu.

Das erfindungsgemäße Verfahren lässt sich jedoch auch vorteilhaft dazu nutzen, um eine Qualitätserfassung an dem Polymerprodukt 4 in Echtzeit vorzunehmen. Bei der Onlinebestimmung der Produktqualität des Polymerproduktes 4 wird zunächst ein Bestimmungszeitpunkt TB vorgegeben, durch welchen die für die Qualitätsbestimmung maßgeblichen Prozessparameter bzw. Produktparameter eindeutig definiert sind. Unter Berücksichtigung der jeweiligen Durchlaufzeiten lassen sich zur Qualitätsbestimmung die Prozessparameter und Produktparameter auswählen, die exakt um die jeweilige Durchlaufzeit vor dem Bestimmungszeitpunkt TB erfasst wurden. So wird beispielsweise der Prozessparameter bzw. Produktparameter in dem Prozessschritt III genutzt, welcher zu dem Messzeitpunkt T = TB - D3 erfasst wurde. Dementsprechend gilt für die Prozess- / Produktparameter des Prozessschrittes II die Messzeit T = TB - D2 und für den Prozessschritt I die Messzeit T = TB - D1.

Durch Auslesen der entsprechenden identifizierten Messwerte lässt sich eine Auswertung ausführen, die die Gesamtheit der an dem zum Bestimmungszeitpunkt TB an dem Polymerprodukt mitgewirkten Parameter berücksichtigt. Die damit erzeugten Qualitätssignale entsprechen der Ist-Qualität des Endproduktes.

Die Qualitätssignale eignen sich somit insbesondere zur Dokumentation und Zuordnung zu dem Polymerprodukt, so dass der nachfolgende Weiterverarbeitungsprozess auf die Istqualität des Polymerproduktes abgestimmt werden kann.

Durch das erfindungsgemäße Verfahren ergibt sich somit eine hohe Flexibilität hinsichtlich der Prozessführung und der Qualitätssteuerung. So lassen sich bereits im Voraus Prozessänderungen aufgrund eintretender Qualitätsschwankungen berücksichtigen.

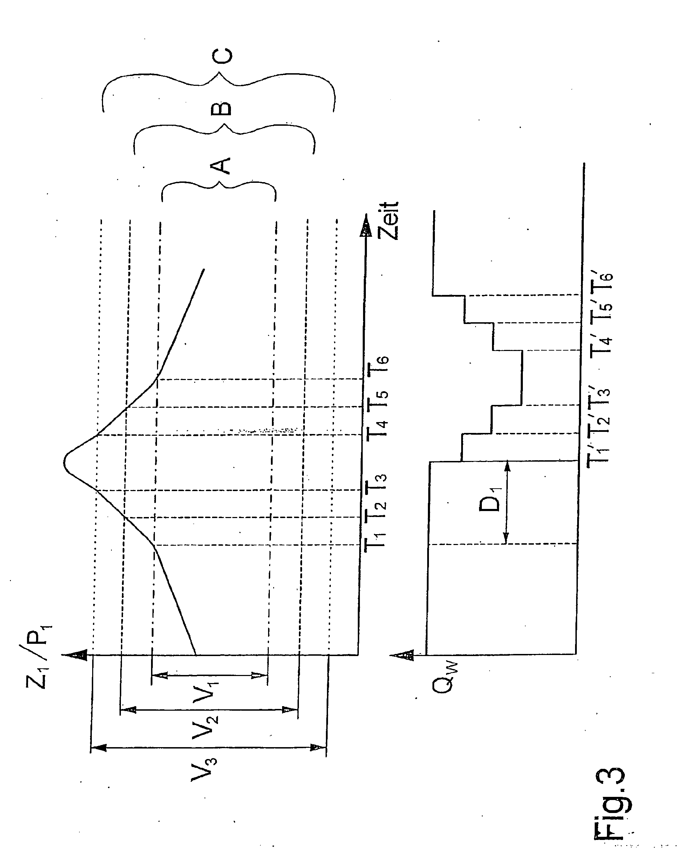

Um einen kontinuierlichen Herstellungsprozess des Polymerproduktes mit möglichst hochwertiger Qualität zu ermöglichen, werden die Prozessparameter und die Produktparameter fortlaufend erfasst und mit Sollwerten oder Sollwertbereichen verglichen. Zur weiteren Erläuterung ist in Fig. 3 der Verlauf eines Prozessparameters oder Produktparameters schematisch dargestellt.

In Fig. 3 ist in einem oberen Diagramm auf der Ordinate der Wert eines Prozessparameters Z1 oder alternativ eines Produktparameters P1 aufgetragen. Die Abszisse des Diagramms stellt die Zeitachse und somit den Prozessverlauf dar. Auf dem unteren Diagramm ist auf der Ordinate ein Qualitätswert QW aufgetragen, wobei die Abszisse identische Zeitachsen aufzeigt.

In dem oberen Diagramm sind insgesamt drei Sollwertbereiche des Parameters in Form von Toleranzbändern eingezeichnet. Das erste Toleranzband V1 ist durch die strickpunktierten Linien gekennzeichnet und stellt den engsten Bereich für den Wert des Prozessparameters oder des Produktparameters dar. Die Toleranzbereiche V2 und V3 lassen jeweils größere Schwankungen des Prozessparameters oder des Produktparameters zu. Eine derartige Vorgabe ermöglicht bereits eine Gewichtung der Prozessabweichung. So könnte beispielsweise der Sollwertbereich V1 des Prozessparameters oder des Produktparameters dazu genutzt werden, um eine höchste Qualitätsstufe mit der Bezeichnung A zu definieren. Dementsprechend würde der Sollwertbereich V2 eine abgestufte Qualität mit der Bezeichnung B und der Sollwertbereich V3 eine weitere Abstufung der Qualität mit der Stufe C vorsehen.

In dem oberen Diagramm ist der Istwertverlauf des Prozessparameters Z1 oder des Produktparameters P1 eingetragen. Der Verlauf zeigt, dass zur Messzeit T1 der Istwert des Parameters den Sollwertbereich V1 verlässt. Insoweit würde dies zu einer Qualitätsminderung des Endproduktes von der Stufe A in die Stufe B führen. Bereits nach der Messzeit T2 tritt eine weitere Überschreitung des Sollwertbereiches V2 und nach der Messzeit T3 sogar eine Überschreitung des größten Sollwertbereiches V3 ein. Damit ist für das Endprodukt eine weitere Qualitätsabstufung bis hin zu mangelnden Qualität zu erwarten. Der Verlauf des Istwertes zeigt erst nach einer Zeit T4 einen in den Sollwertbereich V3 liegenden Wert auf. Somit würde in den Zeitraum zwischen der Messzeit T3 und T4 eine unzulässige Abweichung des Prozessparameters bzw. Produktparameters festgestellt, die zu einer mangelnden Qualität des Endproduktes führt. Die Auswirkungen auf das Endprodukt machen sich jedoch erst nach Ablauf der Durchlaufzeit D1 bemerkbar.

Zur Veranschaulichung ist in dem unteren Diagramm der Verlauf eines Qualitätswertes des Polymerproduktes aufgetragen. Zum Zeitpunkt T1 wird nach wie vor ein Faserprodukt erzeugt, welches die höchste Produktqualität mit der Stufe A aufweist. Der Einfluss der Sollwertüberschreitung macht sich an dem Polymerprodukt erst zu einer Zeit T1' bemerkbar. Dabei liegt zwischen der Messzeit T1 und der Zeit T1' die Durchlaufzeit D1. Die Veränderungen der Qualitätsstufen werden somit zeitversetzt in dem Faserprodukt auftreten.

An dem in Fig. 3 dargestellten Verlauf des Prozessparameters bzw. des Produktparameters lassen sich Vorteile des erfindungsgemäßen Verfahrens erkennen. So lässt bereits die fortlaufende Überwachung und Auswertung des Prozessparameters die Erzeugung eines Steuersignales zu, die der Prozessänderung in dem ersten Prozessschritt unmittelbar entgegenwirkt, so dass die unzulässige Abweichung des Prozessparameters sich nur kurzfristig auswirkt. Die gleichzeitige Erzeugung des Qualitätssignales lässt unmittelbar erkennen, zu welcher Zeit ein Qualitätseinbruch in dem Endprodukt zu erwarten ist. Daraus können zusätzliche Prozessänderungen abgeleitet werden, um beispielsweise bei Speicherung des Polymerproduktes Qualitätsänderungen einzuplanen. So lässt sich beispielsweise bis zu der Zeit T1' das Polymerprodukt zu einer Qualitätsstufe A produzieren. Die in den Zeitraum zwischen der Zeit T1' und T6' hergestellte Polymerprodukt könnte gesondert gespeichert werden. Erst nach Erreichen der Zeit T6' würde wieder eine A-Qualität erzeugt.

Das in Fig. 3 dargestellte Ausführungsbeispiel eines Verlaufs eines Prozessparameters bzw. eines Produktparameters ist beispielhaft. Bei der Überwachung und Erzeugung von Steuersignalen und Qualitätssignalen ist es auch üblich, Verzögerungszeiten einzubeziehen, die beispielsweise zunächst eine Überschreitung eines Sollwertbereiches zulassen und erst nach Ablauf einer Verzögerungszeit eine Auswertung und einen Eingriff ermöglichen.

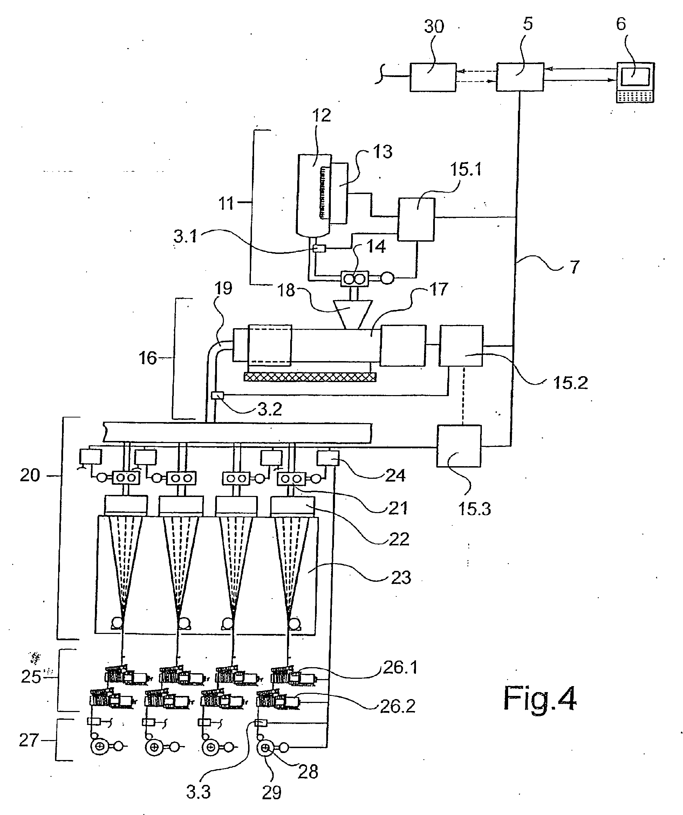

In Fig. 4 ist ein Ausführungsbeispiel eines Herstellungsprozesses für schmelzgesponnene Fäden schematisch dargestellt. In dem Herstellungsprozess werden eine Vielzahl von Fäden aus einem thermoplastischen Vorprodukt gesponnen und zu Spulen aufgewickelt. Hierzu wird das thermoplastische Vorprodukt zuvor in einer Granulataufbereitung 11 kondentioniert. Die Granulataufbereitung 11 weist im wesentlichen einen Trockner 12 mit einer Heizung 13 sowie eine Dosierung 14 auf. Zur Steuerung der Granulataufbereitung 11 ist eine Maschinensteuerung 15.1 vorgesehen. Hierbei der Maschinensteuerung 15.1 ein Sensormittel 3.1 zugeordnet, welches den Trocknungsgrad des aus dem Trockner 12 gegebenen Granulates fasst.

Das getrocknete Granulat wird dosiert einer Schmelzeaufbereitung 16 zugeführt. Die Schmelzeaufbereitung 16 besteht im wesentlichen aus einem Extruder 17, dem über einen Einfüllstutzen 18 dann das Granulat zugeführt wird. Innerhalb des Extruders 17 ist eine Extruderschnecke angetrieben, so dass das Granulat aufgeschmolzen und über eine Schmelzeleitung 19 am Ausgang des Extruders 17 abgeführt wird. Die Schmelzeaufbereitung 16 wird über die Maschinensteuerung 15.2 überwacht und gesteuert, wobei ein Sensormittel 3.2 als Drucksensor ausgebildet ist und in der Schmelzeleitung 19 den Schmelzedruck erfasst.

Zum Schmelzspinnen, Behandeln und Aufwickeln der Fäden ist eine Spinnvorrichtung 20, eine Behandlungseinrichtung 25 und eine Aufwickeleinrichtung 27 vorgesehen. Die Spinnvorrichtung 20 weist im einzelnen eine Mehrzahl von Spinnpumpen 21 auf, die eine Mehrzahl von Spinnköpfen 22 mit der Schmelze versorgen. Jeder der Spinnköpfe 22 weist mehrere Spinndüsen auf, wobei in Fig. 4 pro Spinnstelle nur eine Spinndüse dargestellt ist. Anschließend werden die frisch extrudierten Fasern durch eine Kühleinrichtung 23 unterhalb des Spinnkopfes abgekühlt.

Die Behandlungsvorrichtung 25 wird in diesem Ausführungsbeispiel durch zwei Galetteneinheiten 26.1 und 26.2 gebildet, durch welche die Fäden verstreckt werden.

Die Aufwickeleinrichtung 27 weist pro Spinnstelle zumindest eine Spulspindel 28 auf, an deren Umfang mehrere Spulen 29 gleichzeitig gebildet werden. So wird der verstreckte Faden als Polymerprodukt zu jeweils einer Spule 29 aufgewickelt.

Die Spinnvorrichtung 20, die Behandlungsvorrichtung 25 und die Aufwickeleinrichtung 27 werden pro Spinnstelle durch eine Stellensteuerung 24 überwacht und gesteuert. Die Mehrzahl der Stellensteuerungen 24 sind dabei über ein BUS-System mit einer übergeordneten Maschinensteuerung 15.3 gekoppelt.

Jede der Stellensteuerung 24 sind mehrere Sensoren zugeordnet, wobei in diesem Ausführungsbeispiel nur ein Sensormittel 3.3 in Form eines Fadenspannungssensors beispielhaft dargestellt ist.

Die Maschinensteuerungen 15.1, 15.2 und 15.3 sind mit einer Prozessleitsteuerung 5 verbunden. Über die Prozessleitsteuerung 5 wird der gesamte Herstellungsprozess vom Vorprodukt bis zum Polymerprodukt gesteuert und überwacht. Hierbei stellen die Granulataufbereitung 11, die Schmelzeaufbereitung 16, die Spinnvorrichtung 20, die Behandlungseinrichtung 25 und die Aufwickeleinrichtung 27 jeweils ein Prozessmodul dar, in welchem ein Prozessschritt ausgeführt wird. Die in den Prozessmodulen 11, 16, 20, 25 und 27 dargestellten Sensormittel sind hierbei nur beispielhaft. Grundsätzlich weisen derartige Prozessmodule mehrere Sensoren zur Überwachung des Herstellungsprozesses auf. Aus der DE 199 11 704 A1 ist beispielsweise ein Herstellungsprozess eines synthetischen Fadens beschrieben, aus welchem eine Überwachung der Produkt- und Maschinenparameter bekannt ist. Insoweit wird auf die zitierte Druckschrift Bezug genommen.

Die Prozessleitsteuerung 5 ist über eine Schnittstelle mit einer Ausgabe- / Bedienungseinheit 6 gekoppelt. Zum Datenaustausch könnte die Prozessleitsteuerung 5 zusätzlich mit einem übergeordneten Leitsystem 30 gekoppelt sein. Dabei lassen sich unmittelbar Vorgaben zur Herstellung und Überwachung des Herstellungsprozesses von dem Leitsystem 30 der Prozessleitsteuerung 5 aufgeben.

Bei der in Fig. 4 dargestellten Herstellungsanlage werden die mit den Sensormitteln 3.1, 3.2 und 3.3 erfassten Signale über die jeweiligen Maschinensteuerungen 15.1, 15.2 und 15.3 unmittelbar der Prozessleitsteuerung 5 zugeführt. Somit gelangen alle relevanten Prozessparameter und Produktparameter der gesamten Prozesskette zur Prozessleitsteuerung 5. Die Analysen und Auswertungen der jeweiligen Messsignale wird innerhalb der Prozessleitsteuerung 5 gemäß der vorhergehenden Beschreibung ausgeführt.

Als Beispiel der Prozessführung könnte an der Granulataufbereitung 11 festgestellt werden, dass das Vorprodukt eine zu hohe Feuchtigkeit und somit einen unzulässigen Trocknungsgrad aufweist. Dieser über das Sensormittel 3.1 erfasste Prozessparameter würde sich jedoch erst nach einer Durchlaufzeit von ca. zwei Stunden in dem zu einer Spule 29 gewickelten Faden bemerkbar machen. Unter der Annahme, dass die Spulen zur Fertigstellung eine Wickelzeit von acht Stunden benötigen und diese Wickelzeit bei Feststellung und Messung des unzulässigen Trocknungsgrades erst zu 50 % abgelaufen wäre, würde eine Qualitätsminderung des Polymerproduktes innerhalb der Wickelzeit der derzeit gewickelten Spulen auftreten. Da die Spulen bis Fertigstellung noch vier Stunden gewickelt werden müssten, jedoch der Qualitätsmangel des Produktes sich jedoch bereits nach zwei Stunden bemerkbar macht, lässt sich aufgrund des erfindungsgemäßen Verfahrens durch die Auswertung und Analyse der Qualitätssignale entsprechende Steuersignale erzeugen, die bereits einen Spulenwechsel nach einer Wickelzeit von sechs Stunden durchführen. Damit wäre sichergestellt, dass das verminderte Faserprodukt nicht in die bereits überwiegend fertig gestellte Spule mit guter Qualität eingewickelt wird.

Das erfindungsgemäße Verfahren ist somit besonders vorteilhaft bei der Herstellung von strangförmigen Polymerprodukten, die nach Fertigstellung in Form von Spulen oder Kannen oder sonstigen Mitteln gespeichert werden.

Die in den Ausführungsbeispielen dargestellten erfindungsgemäßen Vorrichtungen sind ebenfalls beispielhaft in ihrem Aufbau hinsichtlich der Prozessmodule. So kann die Prozesskette bereits eine Polykondensation erfassen, die unmittelbar an dem Schmelzspinnprozess vorgeschaltet ist. Ebenso erstreckt sich das erfindüngsgemäße Verfahren und die erfindungsgemäße Vorrichtung auf Herstellungen, bei welcher ein Zwischenprodukt bereitgestellt wird, welches nach definierter Durchlaufzeit einem Weiterverarbeitungsprozess zugeführt wird. Damit ist ebenfalls eine kontinuierliche Herstellung unter Berücksichtigung definierter Durchlaufzeit gegeben.

### Bezugszeichenliste

- 1: Vorprodukt
- 2.1, 2.2, 2.3: Prozessmodul
- 3.1, 3.2, 3.3: Sensormittel
- 4: Polymerprodukt
- 5: Prozessleitsteuerung
- 6: Ausgabe- / Bedieneinheit
- 7: Steuer- / Überwachungsnetzwerk
- 8: Speichermittel
- 9: Digitalisierungsmittel
- 10: Auswertungselektrik
- 11: Granulataufbereitung
- 12: Trockner
- 13: Heizung
- 14: Dosierung
- 15, 15.1, 15.2, 15.3: Maschinensteuerung
- 16: Schmelzeaufbereitung
- 17: Extruder
- 18: Einfüllstutzen
- 19: Schmelzeleitung
- 20: Spinnvorrichtung
- 21: Spinnpumpe
- 22: Spinnkopf
- 23: Kühleinrichtung
- 24: Stellensteuerung
- 25: Behandlungsvorrichtung
- 26.1, 26.2: Galetteneinheit
- 27: Aufwickeleinrichtung
- 28: Spulspindel
- 29: Spule
- 30: Leitsystem

## Patentansprüche

1. Verfahren zur Qualitätssteuerung bei Herstellung eines strangförmigen Polymerproduktes aus einem synthetischen Vorprodukt, bei welchem die Herstellung des Polymerproduktes in mehreren aufeinander folgenden Prozessschritten kontinuierlich erfolgt, bei welchem zumindest zu einem der Prozessschritte ein Prozessparameter und/oder ein Produktparameter, welcher sich zeitversetzt in der endgültigen Fertigstellung des Polymerproduktes auswirkt, erfasst und mit einem Sollwert oder einem Sollwertbereich verglichen wird und bei welchem nach dem Vergleich zumindest ein Qualitätssignal zur Bestimmung der Qualität des Polymerproduktes und/oder ein Steuersignal zur Steuerung eines der Prozessschritte erzeugt wird, **dadurch gekennzeichnet, dass**
- dem Prozessparameter und/oder dem Produktparameter ein Messzeitpunkt, zu welcher der Prozessparameter und/oder der Produktparameter gemessen wird, und eine Durchlaufzeit zugeordnet wird, wobei die Durchlaufzeit den Materialfluss vom jeweiligen Prozessschritt bis hin zur Fertigstellung des Polymerproduktes kennzeichnet,
oder
- dem Qualitätssignal und/oder Steuersignal ein Bestimmungszeitpunkt zugeordnet ist und dass bei der Bestimmung des Qualitätssignals und/oder Steuersignals der Prozessparameter und/oder der Produktparameter oder die Abweichung des Prozessparameters und/oder des Produktparameters von dem Sollwert oder dem Sollwertbereich herangezogen wird, der oder die zeitlich unter Berücksichtung des Materialflusses um eine Durchlaufzeit vor dem Bestimmungszeitpunkt erfasst wurde.

2. Verfahren nach Anspruch 1, **dadurch gekennzeichnet, dass** dem Prozessparameter und/oder dem Produktparameter ein Messort zugeordnet wird, durch welchen die Durchlaufzeit bestimmt wird.

3. Verfahren nach einem der vorgenannten Ansprüche, **dadurch gekennzeichnet, dass** mehrere Prozessparameter und/oder mehrere Produktparameter erfasst werden, wobei jedem der Prozessparameter und/oder jedem der Produktparameter der jeweilige Messzeitpunkt und die jeweilige Durchlaufzeit zugeordnet wird.

4. Verfahren nach Anspruch 3, **dadurch gekennzeichnet, dass** die Prozessparameter und/oder die Produktparameter fortlaufen erfasst und gespeichert werden.

5. Verfahren nach Anspruch 3 oder 4, **dadurch gekennzeichnet, dass** zur Erzeugung des Qualitätssignals und/oder des Steuersignals die Prozessparameter und/oder Produktparameter mit gleichem Messzeitpunkt herangezogen werden.

6. Verfahren nach Anspruch 3 oder 4, **dadurch gekennzeichnet, dass** zur Erzeugung des Qualitätssignals und/oder des Steuersignals die Prozessparameter und/oder Produktparameter mit gleicher Durchlaufzeit herangezogen werden.

7. Verfahren nach Anspruch 3 oder 4, **dadurch gekennzeichnet, dass** zur Erzeugung des Qualitätssignals und/oder des Steuersignals die Prozessparameter und/oder Produktparameter herangezogen werden, deren Messzeitpunkt und Durchlaufzeit einen identischen zukünftigen Bestimmungszeitpunkt ergeben.

8. Verfahren nach einem der vorgenannten Ansprüche, **dadurch gekennzeichnet, dass** dem Prozessparameter und/oder Produktparameter mehrere Sollwerte oder Sollwertbereiche zugeordnet sind, durch welche eine Gewichtung der Abweichung des Prozessparameters und/oder des Produktparameters vorgegeben ist.

9. Verfahren nach Anspruch 8, **dadurch gekennzeichnet, dass** die Vorgaben der Sollwerte und/oder Sollwertbereiche veränderbar sind.

10. Verfahren nach einem der vorgenannten Ansprüche, **dadurch gekennzeichnet, dass** die Erzeugung des Qualitätssignals und/oder des Steuersignals durch veränderbare Algorithmen ausgeführt wird.

11. Verfahren nach einem der Ansprüche 1 bis 10, **dadurch gekennzeichnet, dass** als Polymerprodukt ein Faden in einem letzten Prozessschritt zu einer Spule aufgewickelt wird, wobei die von der Spule maximal aufzunehmende Fadenmenge in einer Wickelzeit auf der Spule abgelegt wird und wobei bei einer deutliche Veränderung der Qualität des Fadens innerhalb der Wickelzeit das Steuersignal bei dem Prozessschritt einen Spulenwechsel bewirkt.

12. Vorrichtung zur Durchführung des Verfahrens nach einem der Ansprüche 1 bis 11, mit einer Herstellungsanlage für ein aus zumindest einem synthetischen Vorprodukt (1) erzeugtes Polymerprodukt (4) bestehend aus mehreren Prozessmodulen (2.1, 2.2, 2.3) und mit einer zentralen Prozessleitsteuerung (5), welche über ein Steuer- und Überwachungsnetzwerk (7) mit den Prozessmodulen (2.1, 2.2, 2.3) verbunden ist, wobei zumindest einem der Prozessmodule (2.1, 2.2, 2.3) ein Sensormittel (3.1) zur Erfassung eines Prozessparameter und/oder Produktparameter zugeordnet ist und wobei die Prozessleitsteuerung (5) ein Speichermittel (8) zur Aufnahme von zumindest einem Sollwert und/oder einem Sollwertbereich des Prozessparameters und/oder Produktparameters und eine Auswertungselektronik (10) zur Erzeugung eines Qualitätssignals und/oder eines Steuersignals aufweist, **dadurch gekennzeichnet, dass** innerhalb der Prozessleitsteuerung (5) dem Sensormittel (3.1) ein Mittel zur Digitalisierung (9) der Messsignale mit Messzeit- und Messortsangabe zugewiesen ist und dass das Speichermittel (8) ein Zeitregister aufweist, in welchem zumindest eine ortsabhängige Durchlaufzeit hinterlegt ist, wobei die Durchlaufzeit den Materialfluss vom betreffendem Prozessmodul (2.1) bis hin zur Fertigstellung des Polymerproduktes (4) kennzeichnet.

13. Vorrichtung nach Anspruch 12 **dadurch gekennzeichnet, dass** die Prozessleitsteuerung (5) eine Schnittstelle zur Anbindung einer manuellen Bedienungseinheit (6) aufweist, durch welche die Vorgaben der Sollwerte und/oder Sollwertbereiche sowie der Durchlaufzeit im Zeitregister aufgebbar sind.

14. Vorrichtung nach Anspruch 12 oder 13 **dadurch gekennzeichnet, dass** die Prozessleitsteuerung (5) eine Schnittstelle zur Anbindung einer Ausgabeeinheit (6) zur Visualisierung von Prozessparameter, Produktparameter oder Qualitätssignale aufweist.

15. Vorrichtung nach dem Anspruch 14, **dadurch gekennzeichnet, dass** die Ausgabeeinheit mit der Bedienungseinheit kombiniert ist.

## Claims

1. Method for controlling the quality during the production of an extruded polymer product from a synthetic primary product, in which method the production of the polymer product takes place continuously in several successive process steps, wherein a process parameter and/or a product parameter having a delayed effect on the final production of the finished polymer product is detected in at least one of the process steps and is compared with a target value or target value range and wherein at least one quality signal for determining the quality of the polymer product and/or a control signal for controlling one of the process steps is generated in accordance with this comparison, said method being
**characterized in that**
- a measuring time is assigned to the process parameter and/or the product parameter, at which the process parameter and/or the product parameter is being measured, and a throughput time is assigned to the process parameter and/or the product parameter, the throughput time characterizing the material flow from the respective process step up to the production of the finished polymer product
- or
a determination time is assigned to the quality signal and/or control signal and that when determining the quality signal and/or control signal, the process parameter and/or the product parameter or the deviation of the process parameter and/or the product parameter from the target value or the target value range is consulted, which process parameter and/or product parameter or which deviation thereof was detected in terms of time while taking into account the material flow at a throughput time before the determination time.

2. Method according to claim 1, **characterized in that** a measuring point is assigned to the process parameter and/or the product parameter, by means of which measuring point the throughput time is determined.

3. Method according to one of the preceding claims, **characterized in that** several process parameters and/or several product parameters are detected, wherein the respective measuring time and the respective throughput time are assigned to each of the process parameters and/or each of the product parameters.

4. Method according to claim 3, **characterized in that** the process parameters and/or the product parameters are detected and stored consecutively.

5. Method according to claim 3 or 4, **characterized in that** the process parameters and/or product parameter having the same measuring time are consulted for generating the quality signal and/or the control signal.

6. Method according to claim 4 or 5, **characterized in that** the process parameters and/or product parameters having the same throughput time are consulted for generating the quality signal and/or the control signal.

7. Method according to claim 3 or 4, **characterized in that** for generating the quality signal and/or the control signal, those process parameters and/or product parameters are consulted, whose measuring time and throughput time result in an identical future determination time.

8. Method according to one of the preceding claims, **characterized in that** several target values or target value ranges are assigned to the process parameter and/or product parameter, using which target values or target value ranges a weighting of the deviation of the process parameter and/or the product parameter is predetermined.

9. Method according to claim 8, **characterized in that** the specifications of the target values and/or target value ranges are changeable.

10. Method according to one of the preceding claims **characterized in that** the generation of the quality signal and/or the control signal is carried out by means of changeable algorithms.

11. Method according to one of the claims 1 to 10, **characterized in that** a thread is wound up as a polymer product to form a spool in a last process step, wherein the maximum thread quantity to be received by the spool is deposited on the spool in a winding time and wherein the control signal brings about a spool change in the process step if the quality of the thread changes distinctly within the winding time.

12. Device for implementing the method according to one of the claims 1 to 11, with a production plant for a polymer product (4), which is generated from at least one synthetic primary product (1) and comprises several process modules (2.1, 2.2, 2.3) and with a central process coordinating control system (5), which is connected to the process modules (2.1, 2.2, 2.3) by means of a control and monitoring network (7), wherein a sensor means (3.1) is assigned to at least one of the process modules (2.1, 2.2, 2.3) for detecting a process parameter and/or product parameter and wherein the process coordinating control system (5) comprises a memory means (8) for recording at least one target value and/or a target value range of the process parameter and/or product parameter and an evaluation electronic system (10) for generating a quality signal and/or a control signal, said device being **characterized in that** within the process coordinating control system (5), a means for digitizing (9) the measuring signals with the measuring time and measuring point data is assigned to the sensor means (3.1) and that the memory means (8) has a time register, in which at least one place-dependent throughput time is stored, wherein the throughput time characterizes the material flow from the related process module (2.1) up to the production of the finished polymer product (4).

13. Device according to claim 12 **characterized in that** the process coordinating control system (5) comprises an interface for connecting a manual operating unit (6), by means of which the specifications of the target values and/or the target value ranges as well as of the throughput time can be entered in the time register.

14. Device according to claim 12 or 13 **characterized in that** the process coordinating control system (5) comprises an interface for connecting an output unit (6) for displaying process parameters, product parameters or quality signals.

15. Device according to the claim 14, **characterized in that** the output unit is combined with the operating unit.

## Revendications

1. Procédé de contrôle de qualité en fabrication d'un produit polymère en forme de barre à partir d'un pré-produit synthétique, dans lequel la fabrication du produit polymère s'effectue en continu en plusieurs étapes de traitement successives, dans lequel un paramètre de traitement concernant au moins l'une des étapes de traitement et/ou un paramètre de produit qui agit en décalage temporel sur la fabrication finale du produit polymère sont saisis et comparés à une valeur de consigne ou à une plage de valeurs de consigne, et dans lequel après la comparaison, au moins un signal de qualité est formé pour déterminer la qualité du produit polymère et/ou un signal de commande est formé pour commander l'une des étapes du traitement,
**caractérisé en ce que**
- l'instant auquel le paramètre de traitement et/ou le paramètre de produit sont mesurés et la durée de passage sont associés au paramètre de traitement et/ou au paramètre de produit, la durée de passage caractérisant le flux de matière depuis l'étape de traitement concernée jusqu'à la fabrication finale du produit polymère
- ou
**en ce qu'**un instant de détermination est associé au signal de qualité et/ou au signal de commande et **en ce que** le paramètre de traitement et/ou le paramètre de produit ou l'écart entre le paramètre de traitement et/ou le paramètre de produit par rapport à la valeur de consigne ou la plage de valeurs de consigne qui compte tenu du flux de matière, ont été saisis une durée de passage avant l'instant de détermination, interviennent dans la détermination du signal de qualité et/ou du signal de commande.

2. Procédé selon la revendication 1, **caractérisé en ce qu'**un emplacement de mesure sur lequel la durée de passage est déterminée est associé au paramètre de traitement et/ou au paramètre de produit.

3. Procédé selon l'une des revendications précédentes, **caractérisé en ce que** plusieurs paramètres de traitement et/ou plusieurs paramètres de produit sont saisis, l'instant de mesure et la durée de passage étant associés à chacun des paramètres de traitement et/ou à chacun des paramètres de produit.

4. Procédé selon la revendication 3, **caractérisé en ce que** les paramètres de traitement et/ou les paramètres de produit sont saisis et conservés en mémoire en permanence.

5. Procédé selon les revendications 3 ou 4, **caractérisé en ce que** pour former le signal de qualité et/ou le signal de commande, les paramètres de traitement et/ou les paramètres de produit utilisés sont ceux d'un même instant de mesure.

6. Procédé selon les revendications 3 ou 4, **caractérisé en ce que** pour former le signal de qualité et/ou le signal de commande, les paramètres de traitement et/ou les paramètres de produit qui interviennent correspondent à la même durée de passage.

7. Procédé selon les revendications 3 ou 4, **caractérisé en ce que** pour former le signal de qualité et/ou le signal de commande, les paramètres de traitement et/ou les paramètres de produit qui interviennent sont ceux dont l'instant de mesure et la durée de passage donnent un instant de détermination futur identique.

8. Procédé selon l'une des revendications précédentes, **caractérisé en ce que** plusieurs valeurs de consigne qui déterminent une pondération de l'écart du paramètre de traitement et/ou du paramètre de produit sont associées au paramètre de traitement et/ou au paramètre de produit.

9. Procédé selon la revendication 8, **caractérisé en ce que** les valeurs de consigne et/ou les plages de valeurs de consigne prescrites peuvent être modifiées.

10. Procédé selon l'une des revendications précédentes, **caractérisé en ce que** la formation du signal de qualité et/ou du signal de commande est réalisée par des algorithmes modifiables.

11. Procédé selon l'une des revendications 1 à 10, **caractérisé en ce que** comme produit polymère, un fil est enroulé en bobine dans la dernière étape de traitement, la quantité maximale de fil à reprendre par la bobine au cours d'une durée d'enroulement étant placée sur la bobine et en cas de modification nette de la qualité du fil pendant la durée d'enroulement, le signal de commande a pour effet un changement de bobine lors de l'étape du traitement.

12. Ensemble permettant de mettre en oeuvre le procédé selon l'une des revendications 1 à 11 et présentant une installation de fabrication de produits polymères (4) formés d'au moins un pré-produit synthétique (1) et constituée de plusieurs modules de traitement (2.1, 2.2, 2.3) et d'une commande centrale (5) de conduite du traitement qui est raccordée par un réseau (7) de commande et de surveillance aux modules de traitement (2.1, 2.2, 2.3), un moyen de capteur (3.1) qui saisit un paramètre de traitement et/ou un paramètre de produit étant associé à au moins l'un des modules de traitement (2.1, 2.2, 2.3), la commande (5) de conduite du traitement présentant un moyen de mémoire (8) qui reprend au moins une valeur de consigne et/ou au moins une plage de valeurs de consigne du paramètre de traitement et/ou du paramètre de produit et une électronique d'évaluation (10) qui forme un signal de qualité et/ou un signal de commande,
**caractérisé en ce que**
à l'intérieur de la commande (5) de conduite du traitement, un moyen de numérisation (9) des signaux de mesure et une donnée d'instant de mesure et d'emplacement de mesure sont déliés au moyen de capteur (3.1) et
**en ce que** le moyen de mémoire (8) présente un registre d'horloge dans lequel au moins une durée de passage dépendant de l'emplacement est conservée, la durée de passage caractérisant le flux de matière depuis le module de traitement (2.1) concerné jusqu'à la fabrication finale du produit polymère (4).

13. Ensemble selon la revendication 12, **caractérisé en ce que** la commande (5) de conduite du traitement présente une interface prévue pour le raccordement à une unité manuelle de commande (6) par laquelle les valeurs de consigne et/ou plages de valeurs de consigne imposées ainsi que la durée de passage dans le registre d'horloge peuvent être introduits.

14. Ensemble selon les revendications 12 ou 13, **caractérisé en ce que** la commande (5) de conduite du traitement présente une interface destinée à être reliée à une unité de sortie (6) qui permet de visualiser les paramètres de traitement, les paramètres de produit ou les signaux de qualité.

15. Ensemble selon la revendication 14, **caractérisé en ce que** l'unité de sortie est combinée à l'unité de commande.
